# EUROPEAN PATENT SPECIFICATION

(11) **EP 3 296 539 B1**
(45) Date of publication and mention of the grant of the patent: **28.12.2022**
(21) Application number: 16792729.2
(22) Date of filing: 11.05.2016
(51) Int. Cl.: F02B 75/32, F02B 75/04, F02D 15/02, F04B 17/05, F16C 5/00

(54) **OIL PRESSURE GENERATING DEVICE AND CROSSHEAD ENGINE**
ÖLDRUCKERZEUGUNGSVORRICHTUNG UND KREUZKOPFMOTOR
GÉNÉRATEUR DE PRESSION D'HUILE ET MOTEUR À CROSSE

(30) Priority: 11.05.2015 JP 2015096717
(43) Date of publication of application: 21.03.2018
(73) Proprietor: IHI Corporation, Tokyo 135-8710 (JP)
(72) Inventor: YAMADA, Takeshi, Tokyo 135-8710 (JP); UMEMOTO, Yoshiyuki, Aioi-shi Hyogo 678-0041 (JP)
(74) Representative: TBK
(86) International application number: PCT/JP2016/064060
(87) International publication number: WO 2016/182004

(56) References cited:
- EP-A2- 2 687 707
- DE-A1- 19 835 146
- JP-A- S62 111 179
- JP-A- 2005 054 619
- JP-A- 2014 020 375
- JP-A- 2015 503 058
- US-A- 1 595 452
- US-A- 3 545 569
- US-A- 3 724 432
- US-A1- 2009 205 615
- US-A1- 2010 275 884

## Description

### [Technical Field]

The present disclosure relates to a crosshead engine according to the preamble of claim 1 in which a crosshead is connected to a piston rod.

### [Background Art]

In crosshead engines which are widely used in marine engines, a crosshead is provided at an end of a piston rod to which a piston is fixed. A connecting bar (a connecting rod) connects the crosshead and a crankshaft, and a reciprocating motion of the crosshead is converted into a rotating motion of the crankshaft.

An engine of Patent Document 1 is such a crosshead engine in which a hydraulic piston is disposed in a crosshead and the hydraulic piston is operated by an oil pressure so that a position of the piston at top dead center is changed and a compression ratio is variable. A generic crosshead engine having the features of the preamble of claim 1 is shown in Patent Document 2.

### [Citation List]

### [Patent Document]

[Patent Document 1]
   JP 2014 020375 A
[Patent Document 2]
   US 3 545 569 A

### [Summary of Invention]

### [Technical Problem]

When a hydraulic mechanism is provided in the crosshead engine as described in the above-described Patent Document 1, it is necessary to provide a hydraulic pump for boosting the oil pressure. Also, according to an application of the hydraulic mechanism, there may be cases in which a hydraulic pump with a large output capable of generating high pressure is required.

The present disclosure is made in view of such problems, and an object of the present disclosure is to provide a crosshead engine in which a new hydraulic pump is not required to be installed or which is capable of making a newly installed hydraulic pump have a small output.

### [Solution to Problem]

The object is achieved by a crosshead engine having the features of claim 1.

Further advantageous developments of the present invention are set out in the dependent claims.

### [Effects of Invention]

According to the present disclosure, it is not necessary to install an additional hydraulic pump for generating oil pressure in the crosshead engine, or it is possible to allow an additionally installed hydraulic pump to have a small output.

### [Brief Description of Drawings]

FIG. 1 is a view showing an entire constitution of a uniflow scavenging two-cycle engine.
FIG. 2A is a view showing a connection portion between a piston rod and a crosshead pin.
FIG. 2B is a view showing the connection portion between the piston rod and the crosshead pin.
FIG. 3A is a view showing a change in a relative position between the piston rod and the crosshead pin.
FIG. 3B is a view showing the change in the relative position between the piston rod and the crosshead pin.
FIG. 4 is a view showing an arrangement of an oil pressure generating device.
FIG. 5A is a view showing a main member.
FIG. 5B is a view showing the main member.
FIG. 6A is a view showing an operation of an oil pressure generating device.
FIG. 6B is a view showing the operation of the oil pressure generating device.
FIG. 6C is a view showing the operation of the oil pressure generating device.
FIG. 7A is a view showing control of the oil pressure generating device.
FIG. 7B is a view showing the control of the oil pressure generating device.

### [Description of Embodiments]

Preferred embodiments of the present disclosure will be described in detail with reference to the accompanying drawings. Dimensions, materials, other specific numerical values, and so on, indicated in these embodiments are merely examples for facilitating comprehension of the disclosure, and unless indicated otherwise, the present disclosure is not limited thereto. Note that in the specification and drawings, elements having substantially the same functions and constitutions will be given the same reference numerals, and a duplicate description thereof will be omitted. Further, elements not directly related to the present disclosure are not shown in the drawings.

In the following embodiments, a so-called dual fuel type engine in which one of a gas operation mode for mainly burning a fuel gas as a gaseous fuel and a diesel operation mode for burning fuel oil as a liquid fuel can be selectively performed will be described. Also, a case in which an engine (a two-cycle engine or a two-stroke engine) that completes one cycle in two strokes is formed as a uniflow scavenging type in which gas flows in one direction in a cylinder will be described. However, a type of the engine is not limited to the dual fuel type, the two-cycle type, or the uniflow scavenging type, but need only be a crosshead engine.

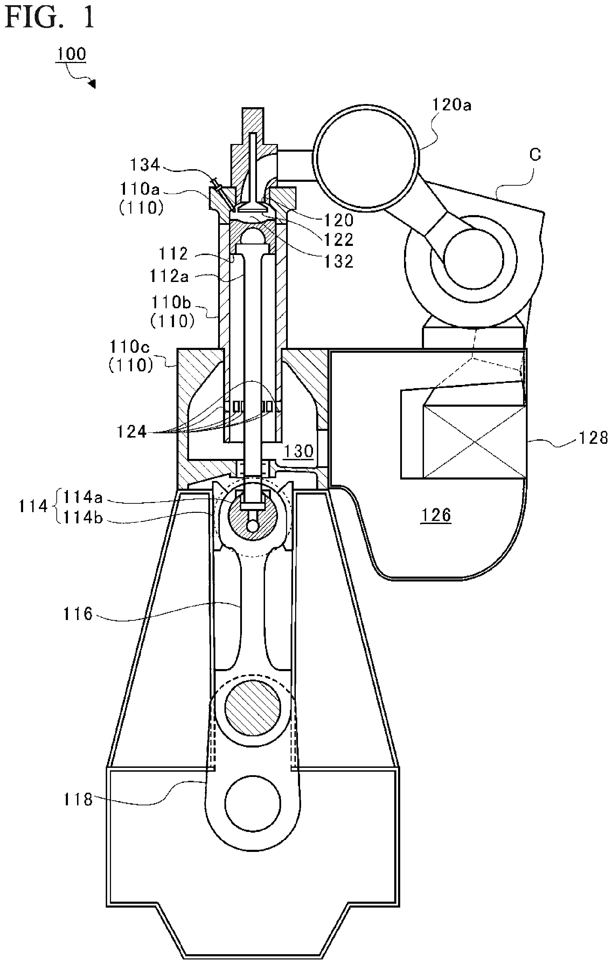

FIG. 1 is a view showing an entire constitution of a uniflow scavenging two-cycle engine 100 (a crosshead engine). For example, the uniflow scavenging two-cycle engine 100 of the embodiment is used in a ship or the like. Specifically, the uniflow scavenging two-cycle engine 100 includes a cylinder 110, a piston 112, a crosshead 114, a connecting rod 116, a crankshaft 118, an exhaust port 120, an exhaust valve 122, a scavenging port 124, a scavenging reservoir 126, a cooler 128, a scavenging chamber 130, and a combustion chamber 132.

In the uniflow scavenging two-cycle engine 100, exhaust, intake, compression, combustion, and expansion are performed during two strokes, an up-stroke and a down-stroke, of the piston 112, and the piston 112 reciprocates in the cylinder 110. An upper end of a piston rod 112a is fixed to the piston 112. Also, a crosshead pin 114a of the crosshead 114 is connected to a lower end (a first end) of the piston rod 112a, and the crosshead 114 reciprocates together with the piston 112. The crosshead 114 is restricted from moving in a direction (a left and right direction in FIG. 1) perpendicular to a stroke direction of the piston 112 by a guide shoe 114b.

The crosshead pin 114a is inserted into a hole provided at an upper end (a second end) of the connecting rod 116 and supports the second end of the connecting rod 116. Further, a lower end of the connecting rod 116 is connected to the crankshaft 118, and the crankshaft 118 rotates with respect to the connecting rod 116. As a result, when the crosshead 114 reciprocates with a reciprocating motion of the piston 112, the crankshaft 118 is rotated by interlocking with the reciprocating motion thereof.

That is, the first end of the piston rod 112a to which the piston 112 is fixed and the second end of the connecting rod 116 connected to the crankshaft 118 are connected through the crosshead 114, and the crosshead 114 reciprocates in the stroke direction of the piston 112.

The exhaust port 120 is an opening provided at a cylinder head 110a located above the top dead center of the piston 112 and is opened and closed to discharge an exhaust gas after combustion generated in the cylinder 110. The exhaust valve 122 is moved up and down at a predetermined timing by an exhaust valve drive device, which is not shown, to open and close the exhaust port 120. As described above, the exhaust gas discharged through the exhaust port 120 is supplied to a turbine side of a turbocharger C via an exhaust pipe 120a and then discharged to the outside.

The scavenging port 124 is a hole which passes through from an inner circumferential surface (an inner circumferential surface of a cylinder liner 110b) at a lower end side of the cylinder 110 to an outer circumferential surface, and a plurality of scavenging ports 124 are provided all around the cylinder 110. The scavenging port 124 suctions an active gas into the cylinder 110 according to a sliding operation of the piston 112. The active gas includes an oxidizer such as oxygen, ozone or the like, or a mixture thereof (e.g., air).

The active gas (e.g., air) pressurized by a compressor of the turbocharger C is sealed in the scavenging reservoir 126 and cooled by the cooler 128. The cooled active gas is pressed into a scavenging chamber 130 formed in a cylinder jacket 110c. The active gas is suctioned into the cylinder 110 from the scavenging port 124 by a differential pressure between the scavenging chamber 130 and the cylinder 110.

A liquid fuel injection valve 134 is provided at the cylinder head 110a. In the gas operation mode, an appropriate amount of fuel oil is injected from the liquid fuel injection valve 134 at a desired point of time in an engine cycle. The fuel oil is vaporized by heat of the combustion chamber 132 surrounded by the cylinder head 110a, the cylinder liner 110b, and the piston 112, spontaneously ignited, burned in a short time, and increases a temperature of the combustion chamber 132 extremely. A gas fuel injection valve which is not shown is provided in the vicinity of the scavenging port 124 or at a portion of the cylinder 110 from the scavenging port 124 to the combustion chamber 132, and a fuel gas injected from the gas fuel injection valve and flowed into the cylinder 110 is heated by combustion heat of the fuel oil, thereby being reliably burned at a desired timing. The piston 112 reciprocates mainly by an expansion pressure due to the combustion of the fuel gas.

Here, the fuel gas is produced, for example, by gasifying liquefied natural gas (LNG). Also, the fuel gas is not limited to LNG, and, for example, liquefied petroleum gas (LPG), gas oil, heavy oil or the like may be gasified and applied as the fuel gas.

Meanwhile, in the diesel operation mode, the injection of the fuel gas from the gas fuel injection valve is stopped, and a larger amount of fuel oil than the fuel oil injection amount in the gas operation mode is also injected from a pilot injection valve. The piston 112 reciprocates due to an expansion pressure from the combustion of the fuel oil rather than the fuel gas.

As described above, the uniflow scavenging two-cycle engine 100 selectively performs one of the gas operation mode and the diesel operation mode. A variable mechanism is provided in the uniflow scavenging two-cycle engine 100 to allow a compression ratio of the piston 112 to vary according to the selected mode. Hereinafter, the variable mechanism will be described in detail.

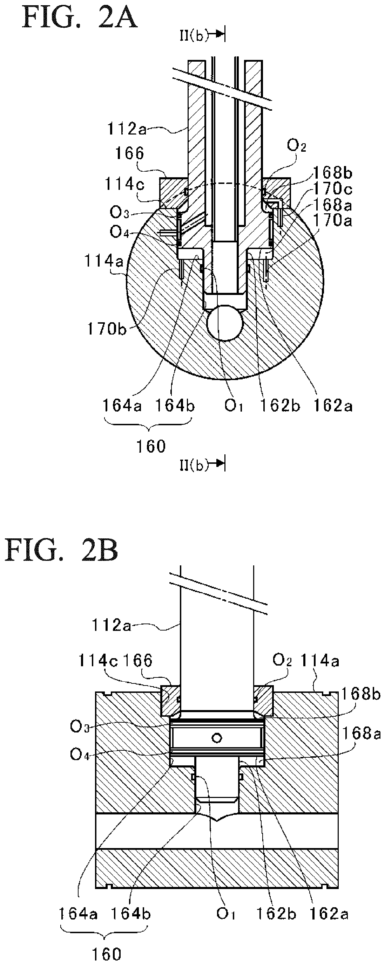

FIGS. 2A and 2B are views showing a connection portion between the piston rod 112a and the crosshead pin 114a, FIG. 2A shows an enlarged view of a portion of FIG. 1 surrounded by a chain line, and FIG. 2B shows a cross section taken along line II(b)-II(b) of FIG. 2A.

As shown in FIGS. 2A and 2B, the first end of the piston rod 112a is inserted into the crosshead pin 114a. Specifically, a connection hole 160 extending perpendicular to an axial direction (a left-right direction in FIG. 2B) of the crosshead pin 114a is formed in the crosshead pin 114a. The connection hole 160 serves as an oil pressure chamber, and the first end of the piston rod 112a is inserted into the oil pressure chamber. In this way, the crosshead pin 114a and the piston rod 112a are connected by inserting the first end of the piston rod 112a into the connection hole 160.

More specifically, a large diameter portion 162a at which an outer diameter of the piston rod 112a is larger than that of the first end side and a small diameter portion 162b which is located on the first end side with respect to the large diameter portion 162a and has an outer diameter smaller than that of the large diameter portion 162a are formed at the piston rod 112a.

Additionally, the connection hole 160 has a large diameter hole portion 164a which is located at a piston 112 side of the connection hole 160 and a small diameter hole portion 164b which is continuous with a connecting rod 116 side of the large diameter hole portion 164a and has an inner diameter smaller than that of the large diameter hole portion 164a.

Additionally, the small diameter portion 162b of the piston rod 112a has a size which is set to be inserted into the small diameter hole portion 164b of the connection hole 160, and the larger diameter portion 162a of the piston rod 112a has a size which is set to be inserted into the large diameter hole portion 164a of the connection hole 160. A first seal member O₁ formed of an O-ring is disposed at an inner circumferential surface of the small diameter hole portion 164b.

A fixing cover 166 of which an outer diameter is larger than that of the connection hole 160 is fixed to an upper end (second end) side of the piston rod 112a with respect to the larger diameter portion 162a of the piston rod 112a. The fixing cover 166 is an annular member, and the piston rod 112a is inserted therein from an upper side thereof. A second seal member O₂ formed of an O ring is disposed at an inner circumferential surface of the fixing cover 166 through which the piston rod 112a is inserted.

A groove 114c recessed in a radial direction of the crosshead pin 114a is formed on an outer circumferential surface of the crosshead pin 114a, and the fixing cover 166 is fitted to an inside of the groove 114.

Further, in a connection portion of the piston rod 112a and the crosshead pin 114a, a first oil pressure chamber 168a (oil pressure chamber) and a second oil pressure chamber 168b (oil pressure chamber) are formed inside the crosshead pin 114a.

The first oil pressure chamber 168a is surrounded by a stepped surface formed by an outer diameter difference between the large diameter portion 162a and the small diameter portion 162b, an inner circumferential surface of the large diameter hole portion 164a, and a stepped surface formed by an inner diameter difference between the large diameter hole portion 164a and the small diameter hole portion 164b.

The second oil pressure chamber 168b is surrounded by an end surface of the large diameter portion 162a on an upper end side of the piston rod 112a, the inner circumferential surface of the large diameter hole portion 164a, and the fixing cover 166. That is, the large diameter hole portion 164a is partitioned into the first end side of the piston rod 112a and the second end side of the connecting rod 116 by the larger diameter portion 162a of the piston rod 112a. With the large diameter portion 162a as a boundary, the first oil pressure chamber 168a is formed by the large diameter hole portion 164a partitioned below the large diameter portion 162a, and the second oil pressure chamber 168b is formed by the large diameter hole portion 164a partitioned above the large diameter portion 162a.

An oil supply passage 170a and an oil discharge passage 170b are in communication with the first oil pressure chamber 168a. An upper end (a second end) of the oil supply passage 170a is opened at the stepped surface formed by the inner diameter difference between the large diameter hole portion 164a and the small diameter hole portion 164b, and a lower end (a first end) thereof is in communication with an oil pressure generating device which will be described below. The oil discharge passage 170b is in communication with an electronic valve which is not shown, and an upper end (a second end) thereof is opened at the stepped surface formed by the inner diameter difference between the large diameter hole portion 164a and the small diameter hole portion 164b.

A subsidiary oil passage 170c which is opened to a wall surface of the fixing cover 166 is in communication with the second oil pressure chamber 168b. The subsidiary oil passage 170c passes through an inside of the crosshead pin 114a via a contact portion between the fixing cover 166 and the crosshead pin 114a and is in communication with a hydraulic pump which is not shown.

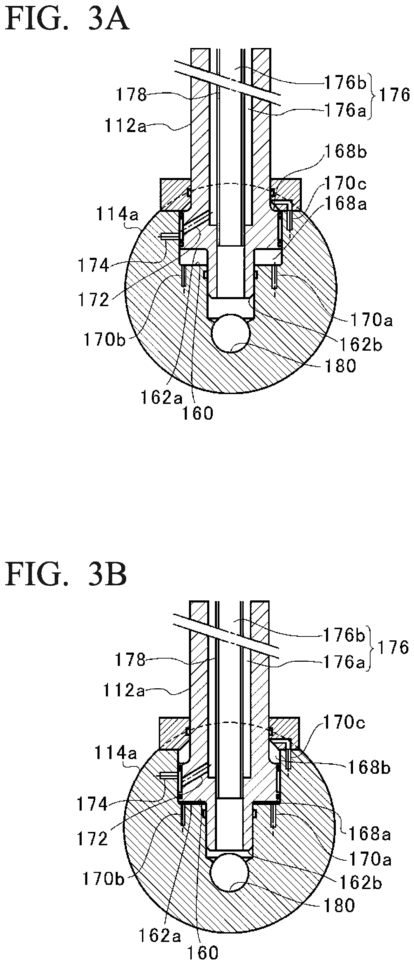

FIGS. 3A and 3B are views showing a change in a relative position between the piston rod 112a and the crosshead pin 114a, FIG. 3A shows a state in which the piston rod 112a has entered the connection hole 160 shallowly, and FIG. 3B shows a state in which the piston rod 112a has entered the connection hole 160 deeply.

A length of the first oil pressure chamber 168a in the stroke direction of the piston 112 is variable, and when the first oil pressure chamber 168a is sealed while hydraulic oil is supplied into the first oil pressure chamber 168a, the state of FIG. 3A can be maintained.

Additionally, when the electronic valve which is not shown is opened, the hydraulic oil passes through the oil discharge passage 170b from the first oil pressure chamber 168a and is then discharged toward the electronic valve by a compression force from the piston rod 112a and the crosshead pin 114a due to the reciprocation of the piston 112. As a result, as shown in FIG. 3B, the length of the first oil pressure chamber 168a in the stroke direction of the piston 112 is shortened. Meanwhile, in the second oil pressure chamber 168b, a length thereof in the stroke direction of the piston 112 is increased.

An entering position (an entering depth) to which the piston rod 112a enters the connection hole 160 (the oil pressure chamber) of the crosshead pin 114a is changed by a change in the length of each of the first oil pressure chamber 168a and the second oil pressure chamber 168b in the stroke direction of the piston 112. In this way, positions of the piston 112 at the top dead center and the bottom dead center are varied by changing a relative position between the piston rod 112a and the crosshead pin 114a.

However, when the piston 112 reaches the top dead center in the state shown in FIG. 3B, a position of the crosshead pin 114a in the stroke direction of the piston 112 is fixed by the connecting rod 116. Meanwhile, although the piston rod 112a is connected to the crosshead pin 114a, a clearance is generated by a space corresponding to the second oil pressure chamber 168b in the stroke direction of the piston 112.

Accordingly, depending on the number of revolutions of the uniflow scavenging two-cycle engine 100, an inertial force of the piston rod 112a may be increased, and the piston rod 112a may excessively move to the piston 112 side. To prevent deviation of the position of the top dead center, oil pressure from the hydraulic pump acts on the second oil pressure chamber 168b through the subsidiary oil passage 170c and restricts movement of the piston rod 112a.

Also, since the uniflow scavenging two-cycle engine 100 is used at the number of revolutions of a comparatively low rotational speed and thus the inertial force of the piston rod 112a is small, the deviation of the position of the top dead center can be restricted even when the oil pressure supplied into the second oil pressure chamber 168b is lowered.

Also, an oil passage hole 172 which extends radially inward from an outer circumferential surface of the piston rod 112a is provided at the piston rod 112a.
Further, a through-hole 174 which passes through from an outer circumferential surface side of the crosshead pin 114a to the connection hole 160 is provided in the crosshead pin 114a. The through-hole 174 is in communication with the above-described hydraulic pump.

In addition, the oil passage hole 172 and the through-hole 174 are opposed in a radial direction of the piston rod 112a. The oil passage hole 172 and the through-hole 174 are in communication with each other. An outer circumferential surface of the oil passage hole 172 at the outer circumferential side of the piston rod 112a is formed so that an oil passage width in the stroke direction of the piston 112 (an up and down direction in FIGS. 3A and B) is wider than other portions of the oil passage hole 172, and, as shown in FIGS. 3A and 3B, even when the relative position between the piston rod 112a and the crosshead pin 114a is changed, a communication state between the oil passage hole 172 and the through-hole 174 is maintained.

A third seal member O₃ and a fourth seal member O₄ which are formed of O-rings are disposed on the outer circumferential surface of the piston rod 112a to be vertically opposed to each other across the outer surface of the oil passage hole 172 in an axial direction of the piston rod 112a (referring to FIGS. 2A and 2B).

An area of the large diameter portion 162a facing the inner circumferential surface of the large diameter hole portion 164a is reduced by a portion corresponding to the oil passage hole 172, and thus the large diameter portion 162a easily inclines with respect to the large diameter hole portion 164a. Meanwhile, the small diameter portion 162b is guided by the small diameter hole portion 164b, and thus an inclination of the piston rod 112a with respect to the stroke direction is suppressed.

Additionally, a cooling oil passage 176 which extends in the stroke direction of the piston 112 and through which cooling oil for cooling the piston 112 and the piston rod 112a flows is formed inside the piston rod 112a. A cooling pipe 178 is disposed inside the cooling oil passage 176, and the cooling oil passage 176 is divided into a supply passage 176a formed at a radially outer side of the piston rod 112a and a return passage 176b formed at an inner side thereof by the cooling pipe 178. The oil passage hole 172 is opened in the supply passage 176a of the cooling oil passage 176.

The cooling oil supplied from the hydraulic pump flows into the supply passage 176a of the cooling oil passage 176 via the through-hole 174 and the oil passage hole 172. The supply passage 176a and the return passage 176b are in communication with each other inside the piston 112, and when the cooling oil flowing through the supply passage 176a reaches an inner wall of the piston 112, the cooling oil passes through the return passage 176b and returns to the small diameter portion 162b side. The cooling oil is in contact with an inner wall of the cooling oil passage 176 and the inner wall of the piston 112, whereby the piston 112 is cooled.

Further, a discharge hole 180 which extends in an axial direction of the crosshead pin 114a is formed in the crosshead pin 114a, and the small diameter hole portion 164b is in communication with the discharge hole 180. The cooling oil flowed in the small diameter hole portion 164b from the cooling oil passage 176 after cooling the piston 112 passes through the discharge hole 180, is discharged to the outside of the crosshead pin 114a and then returns to a tank.

Both of the hydraulic oil supplied into the first oil pressure chamber 168a and the second oil pressure chamber 168b and the cooling oil supplied into the cooling oil passage 176 are returned to the same tank and then pressurized by the same hydraulic pump. Therefore, supply of the hydraulic oil for the hydraulic power and supply of the cooling oil for cooling may be performed with one hydraulic pump, and thus it is possible to reduce the cost.

Next, the oil pressure generating device which is in communication with a lower end (a first end) of the oil supply passage 170a and presses the hydraulic oil into the first oil pressure chamber 168a through the oil supply passage 170a will be described in detail.

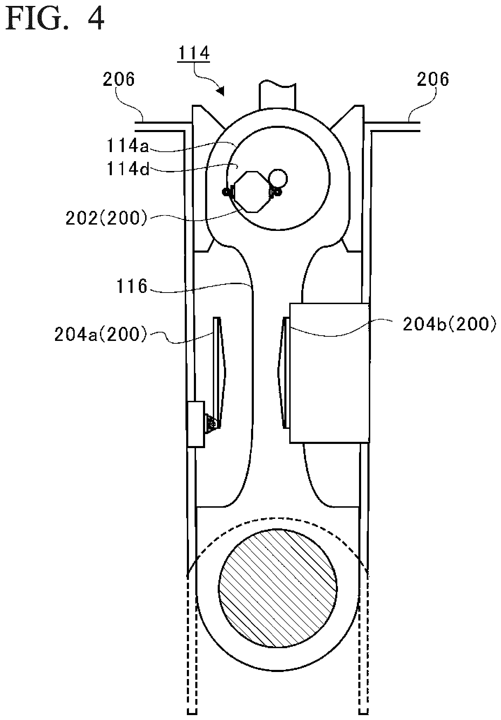

FIG. 4 is a view showing an arrangement of the oil pressure generating device 200. As shown in FIG. 4, the oil pressure generating device 200 includes a main member 202 and one pair of plunger pressing members 204a and 204b. The main member 202 is fixed to one end surface 114d of the crosshead pin 114a. The main member 202 reciprocates integrally with the piston 112 and the crosshead 114 in the stroke direction of the piston 112.

A position of each of the plunger pressing members 204a and 204b in an axial direction of the crosshead pin 114a is located in front of the connecting rod 116 in FIG. 4, and each of the plunger pressing members 204a and 204b is fixed to a frame 206. Also, the main member 202 and the plunger pressing members 204a and 204b are disposed so that the positions thereof in the axial direction of the crosshead pin 114a overlap. Additionally, the main member 202 passes between the pair of plunger pressing members 204a and 204b when reciprocating with the piston 112 and the crosshead 114.

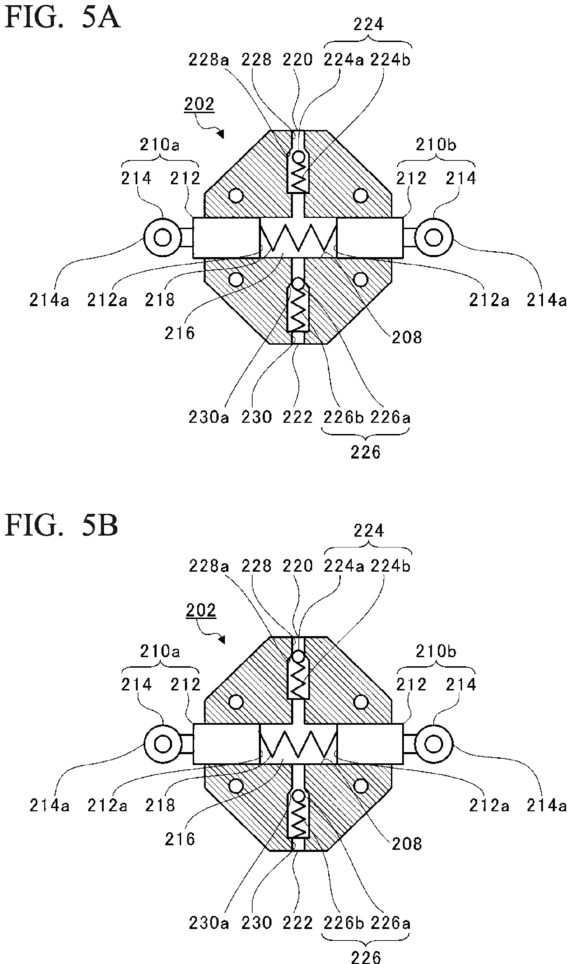

FIGS. 5A and 5B are views showing the main member 202 and show schematic cross-sectional views of the main member 202. As shown in FIGS. 5A and 5B, a through-hole 208 is formed in the main member 202 to pass through the main member 202 in a left and right direction in FIGS. 5A and 5B, and a pair of plungers 210a and 210b are inserted into the through-hole 208.

Each of the plungers 210a and 210b includes a plunger body 212 and a roller 214. The plunger body 212 is inserted into the through-hole 208, and a tail portion thereof protrudes from the through-hole 208. The roller 214 is provided at the tail portion of the plunger body 212 which protrudes from the through-hole 208. The roller 214 is rotatable about a rotation axis perpendicular to a paper surface in FIGS. 5A and 5B.

That is, tails (ends 214a of the rollers 214 opposite to the plunger bodies 212) of the plungers 210a and 210b are located outside the main member 202. Further, heads (ends 212a of the plunger bodies 212 opposite to the rollers 214) of the plungers 210a and 210b are located inside the through-hole 208 of the main member 202.

The head portions 212a of the plunger bodies 212 of the plungers 210a and 210b are spaced apart from each other, and a pressure-boost chamber 216 is formed by the head portions 212a of the plunger bodies 212 and an inner wall of the through-hole 208.

The head portions 212a (the heads of the plungers 210a and 210b) of the plunger bodies 212 of the plungers 210a and 210b face the pressure-boost chamber 216 inside the main member 202. Additionally, the plungers 210a and 210b are slid in the through-hole 208. In FIGS. 5A and 5B, the stroke direction of the piston 112 is a vertical direction, and the plungers 210a and 210b are slid in a direction (here, a direction perpendicular to the stroke direction of the piston 112) intersecting with the stroke direction of the piston 112.

As described above, the pair of plungers 210a and 210b are provided to be spaced apart from each other in a sliding direction with the pressure-boost chamber 216 interposed therebetween, and an elastic member 218 which applies a biasing force in a direction in which the pair of plungers 210a and 210b are spaced apart from each other is provided in the pressure-boost chamber 216. Both ends of the elastic member 218 are fixed to the head portions 212a of the plunger bodies 212 of the plungers 210a and 210b.

In FIGS. 5A and FIG. 5B, an inlet port 220 is provided at an upper side of the main member 202, and a discharge port 222 is provided at a lower side thereof. The inlet port 220 is connected to a supply source of the hydraulic oil, e.g., a hydraulic oil tank, and the hydraulic oil is introduced from the hydraulic oil tank therethrough. The discharge port 222 is in communication with the first oil pressure chamber 168a through the oil supply passage 170a.

Also, a first communication passage 228 which communicates from the inlet port 220 to the pressure-boost chamber 216 is provided in the main member 202. The first communication passage 228 has a taper 228a of which an inner diameter becomes smaller toward the inlet port 220, and a first check valve 224 is provided at the pressure-boost chamber 216 side with respect to the taper 228a. Specifically, the first check valve 224 includes a spherical valve element 224a and an elastic spring 224b, and the valve element 224a is biased upward by the elastic spring 224b in FIGS. 5A and 5B. When the hydraulic oil flows from the inlet port 220 toward the pressure-boost chamber 216, the valve element 224a is pushed by a flow of the hydraulic oil, opens the first communication passage 228, and allows a flow of the hydraulic oil from the inlet port 220 to the pressure-boost chamber 216, as shown in FIG. 5A.

Meanwhile, when the oil pressure in the pressure-boost chamber 216 is increased and the hydraulic fluid flows from the pressure-boost chamber 216 toward the inlet port 220, the valve element 224a comes in contact with the taper 228a inside the first communication passage 228 and closes the first communication passage 228. Accordingly, the first check valve 224 prevents the flow of the hydraulic oil from the pressure-boost chamber 216 toward the inlet port 220.

Furthermore, a second communication passage 230 which communicates from the pressure-boost chamber 216 to the discharge port 222 is provided in the main member 202. The second communication passage 230 has a taper 230a of which an inner diameter becomes larger toward the discharge port 222, and a second check valve 226 is provided at the discharge port 222 side with respect to the taper 230a. Specifically, the second check valve 226 includes a spherical valve element 226a and an elastic spring 226b, and the valve element 226a is biased upward by the elastic spring 226b in FIGS. 5A and 5B. When the oil pressure in the pressure-boost chamber 216 is increased and the hydraulic fluid flows from the pressure-boost chamber 216 toward the discharge port 222, the valve element 226a is pushed by a flow of the hydraulic oil, opens the second communication passage 230 and allows a flow of the hydraulic oil from the pressure-boost chamber 216 to the discharge port 222, as shown in FIG. 5B.

Meanwhile, when the hydraulic oil flows from the discharge port 222 toward the pressure-boost chamber 216, the valve element 226a comes in contact with the taper 230a inside the second communication passage 230 and closes the second communication passage 230. Accordingly, the second check valve 226 prevents the flow of the hydraulic oil from the discharge port 222 toward the pressure-boost chamber 216.

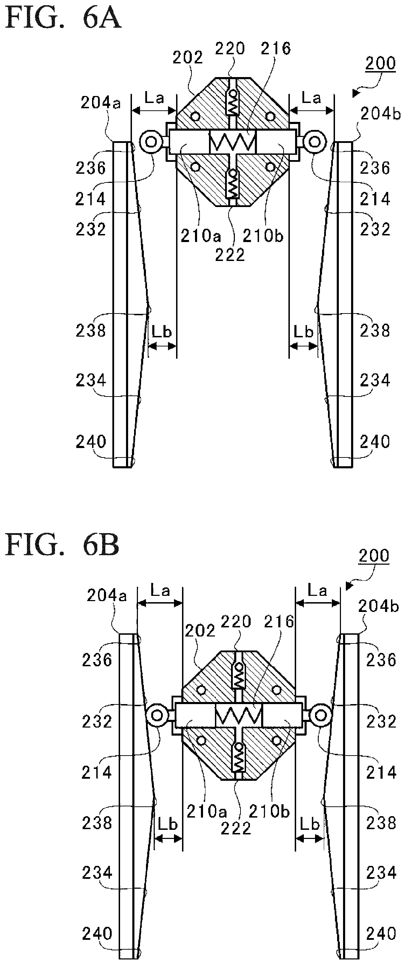

FIGS. 6A to 6C are views showing the operation of the oil pressure generating device 200. FIGS. 6A to 6C show a state in which the main member 202 moves further toward the plunger pressing members 204a and 204b in the stroke direction of the piston 112 than in the state shown in FIG. 4.

As shown in FIG. 6A, the plunger pressing members 204a and 204b have a first inclined surface 232 (an inclined surface) and a second inclined surface 234 (an inclined surface), respectively. The first inclined surface 232 is inclined so that an opposing interval between the plunger pressing members 204a and 204b becomes narrower toward a lower side in the stroke direction (a lower side in FIG. 6A). Also, the second inclined surface 234 is inclined so that the opposing interval between the plunger pressing members 204a and 204b becomes wider toward the lower side in the stroke direction.

A first pressing part 236 is an upper end of the first inclined surface 232 of each of the plunger pressing members 204a and 204b in FIG. 6A and is disposed to be spaced apart from the main member 202 in the sliding direction of the plungers 210a and 210b (a left and right direction in FIGS. 6A to 6C). The distance of separation between the first pressing part 236 and the main member 202 in the left and right direction is defined as a first distance La. The pushing amount of each of the plungers 210a and 210b into the pressure-boost chamber 216 side is defined as a first pushing amount (here, 0).

That is, when the main member 202 moves downward in the stroke direction in FIGS. 6A to 6C and the rollers 214 face the first pressing parts 236 as shown in FIG. 6A, the rollers 214 are spaced apart from the first pressing parts 236, and the plungers 210a and 210b are not pressed by the first pressing parts 236. Additionally, when the main member 202 moves to a position of FIG. 6B, the rollers 214 come in contact with the plunger pressing members 204a and 204b.

A second pressing part 238 is a part having a position different from that of the first pressing part 236 in the stroke direction and is a lower end of the first inclined surface 232 of each of the plunger pressing members 204a and 204b in FIG. 6A. That is, the second pressing part 238 is a part in which a distance of separation from the main member 202 in the left and right direction is a second distance Lb smaller than the first distance La and the opposing interval between the plunger pressing members 204a and 204b is the smallest. In the second pressing part 238, the pushing amount of each of the plungers 210a and 210b into the pressure-boost chamber 216 side is a second pushing amount greater than the first pushing amount.

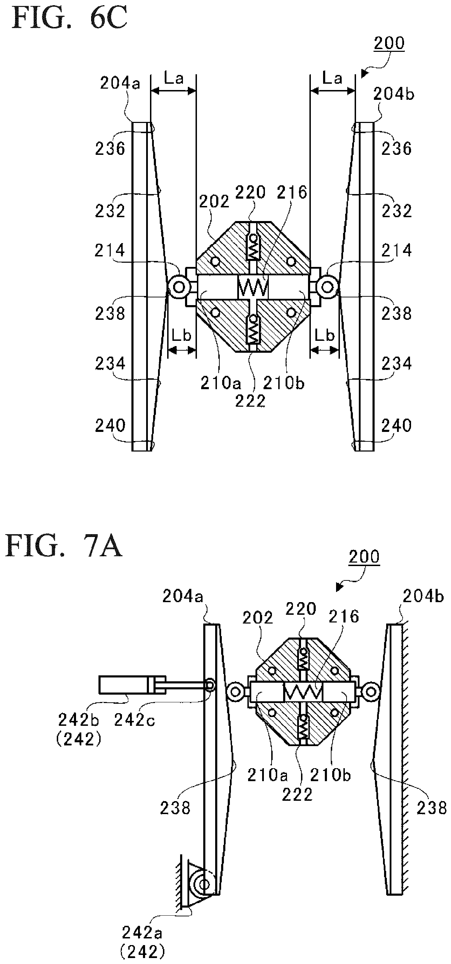

That is, while the main member 202 moves from a position of FIG. 6B to a position of FIG. 6C, the rollers 214 are pressed against the plunger pressing members 204a and 204b while being slid on the first inclined surface 232, and the plungers 210a and 210b are pressed by the second pushing amount into the pressure-boost chamber 216 side.

In this way, the plunger pressing members 204a and 204b press the plungers 210a and 210b into the pressure-boost chamber 216 side while the plungers 210a and 210b move from the first pressing part 236 to the second pressing part 238.

As a result, the pressure-boost chamber 216 pressurizes the hydraulic oil introduced from the inlet port 220 into the main member 202 and then discharges the pressurized hydraulic oil from the discharge port 222. The hydraulic oil discharged from the discharge port 222 is introduced into the first oil pressure chamber 168a through the oil supply passage 170a, and the relative position between the piston rod 112a and the crosshead pin 114a is changed.

Here, a case in which the main member 202 moves downward in the stroke direction of FIG. 6A will be described. To avoid repeated description, detailed description will be omitted. However, when the main member 202 moves upward in the stroke direction of FIG. 6A after moving downward further than the second pressing part 238, the second inclined surface 234 acts in the same manner as the first inclined surface 232. That is, a lower end of the second inclined surface 234 in FIG. 6A becomes a first pressing part 240, and the plunger pressing members 204a and 204b press the plungers 210a and 210b into the pressure-boost chamber 216 side while the plungers 210a and 210b move from the first pressing part 240 to the second pressing part 238.

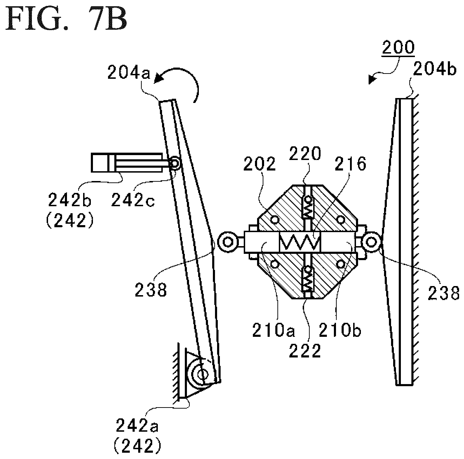

FIGS. 7A and 7B are views showing control of the oil pressure generating device 200. As shown in FIGS. 7A and 7B, a rocking mechanism 242 is provided at the plunger pressing member 204a. The rocking mechanism 242 includes a support part 242a and an actuator 242b.

The support part 242a pivotally supports a lower end side of the plunger pressing member 204a in FIG. 7A. The plunger pressing member 204a is pivotable to a position shown in FIG. 7B about a point pivotally supported by the support part 242a as a rotation axis center. Also, the support part 242a biases the plunger pressing member 204a to be rotated counterclockwise.

The actuator 242b is, for example, a hydraulic type, and a roller 242c is provided at a tail portion thereof. The actuator 242b receives a pressing force from the oil pressure, and the tail portion moves in a left and right direction of FIG. 7A. The roller 242c comes in contact with the plunger pressing member 204a from a left side of FIG. 7A and presses the plunger pressing member 204a to be rotated clockwise.

In the arrangement shown in FIG. 7A, the plunger pressing members 204a and 204b are located at boost positions in which the hydraulic oil is pressurized inside the pressure-boost chamber 216. When the actuator 242b is operated and the roller 242c moves left as shown in FIG. 7B, the plunger pressing member 204a is pivoted according to the roller 242c by a biasing force from the support part 242a, and the distance between the second pressing part 238 of the plunger pressing member 204a and the second pressing part 238 of the plunger pressing member 204b is increased.

As a result, when the main member 202 moves to a position in which the plungers 210a and 210b face the second pressing part 238, the plunger 210b is pressed by the second pressing part 238 and moves left in FIG. 7B. However, since the plunger 210a also moves left correspondingly, a volume of the pressure-boost chamber 216 is not changed, and thus the hydraulic oil is not pressurized. Thereafter, it is impossible to pressurize the hydraulic oil in the pressure-boost chamber 216 until the plunger pressing member 204a is pivoted again.

In this way, the plunger pressing member 204a moves from the boost position shown in FIG. 7A in which the hydraulic oil can be pressurized by reducing the volume of the pressure-boost chamber 216 to a retreat position shown in FIG. 7B in which the hydraulic oil cannot be pressurized in the pressure-boost chamber 216. Therefore, in the oil pressure generating device 200, generation of the oil pressure can be switched on/off with a simple constitution. When the oil pressure is unnecessary, consumption of fuel can be suppressed without applying unnecessary resistance to the piston 112 by setting the plunger pressing member 204a to the retreat position.

Further, by controlling the plunger pressing member 204a to an arbitrary position between the boost position shown in FIG. 7A and the retreat position shown in FIG. 7B, the magnitude of the oil pressure to be generated can be adjusted.

As described above, since the oil pressure can be generated by the oil pressure generating device 200, it is unnecessary to install an additional hydraulic pump for generating the oil pressure. Alternatively, even if the hydraulic pump is installed, the hydraulic pump to be installed can have a small output, and the oil pressure generating device 200 can pressurize the hydraulic oil to high pressure by the moving power of the piston 112.

Also, in the oil pressure generating device 200, when the plungers 210a, 210b start to be pressed against the plunger pressing members 204a and 204b, the rollers 214 come in contact with the plunger pressing members 204a and 204b in a direction intersecting with the stroke direction of the piston 112. Therefore, it is possible to reduce the impact at the time of contact, and it is also possible to suppress a shock wave generated in the hydraulic oil. Furthermore, since the plunger pressing members 204a and 204b can be disposed at an arbitrary position within a moving range of the main member 202 in the stroke direction, the degree of freedom in installation is high.

In the above-described embodiment, the case in which the oil pressure generating device 200 generates the oil pressure for varying the relative position between the piston rod 112a and the crosshead pin 114a has been described. However, the oil pressure generated by the oil pressure generating device 200 may be used for other purposes.

Also, in the above-described embodiment, the case in which the main member 202 is provided at the crosshead 114 has been described, but the main member 202 may be provided at a member other than the crosshead 114 as long as it moves integrally with the piston 112 in the stroke direction of the piston 112. However, when the main member 202 is provided at the crosshead 114, the main member 202 can be easily disposed without interference with other members.

Also, in the above-described embodiment, the case in which the plunger pressing members 204a and 204b have the first inclined surface 232 and the second inclined surface 234 has been described, but the pair of the first inclined surface 232 and the second inclined surface 234 are not indispensable. However, by providing the first inclined surface 232 and the second inclined surface 234, it is possible to gradually increase the oil pressure. Also, only one of the first inclined surface 232 and the second inclined surface 234 may be provided, but by providing the pair of the first inclined surface 232 and the second inclined surface 234, the hydraulic pressures can be boosted twice during one stroke, and thus boosting can be quickly performed. In addition, although each of the first inclined surface 232 and the second inclined surface 234 is shown in a linear shape, each of them may have a curved surface calculated such that a boosting speed of the oil pressure due to the movement of the main member 202 in the stroke direction does not change sharply.

Also, in the above-described embodiment, the case in which the plunger pressing members 204a and 204b are operated from the boost position to the retreat position has been described. However, the plunger pressing members 204a and 204b may not be operated, and for example, a switch valve or the like may be provided at the oil passage of the hydraulic oil discharged from the discharge port 222 to switch the boosting on and off.

Also, in the above-described embodiment, the case in which the pair of plungers 210a and 210b are disposed with the pressure-boost chamber 216 interposed therebetween to be spaced apart from each other in the sliding direction has been described, but only one of the plungers 210a and 210b may be provided. However, when the pair of plungers 210a and 210b are provided and the elastic member 218 is provided in the pressure-boost chamber 216 and the plunger pressing members 204a and 204b are provided corresponding to the pair of plungers 210a and 210b, respectively, the following effects can be obtained. That is, even if an arrangement of the plunger pressing members 204a and 204b with respect to the main member 202 deviates in the opposing direction of the plunger pressing members 204a and 204b, desired boosting performance can be exhibited when the distance between the plunger pressing members 204a and 204b is maintained. That is, by providing the pair of plungers 210a and 210b, strict dimensional management on manufacturing is not required, and a design work and an assembly work can be simplified.

Also, in the above-described embodiment, the case in which the first check valve 224 and the second check valve 226 are provided at the main member 202 has been described, but an electronic valve or the like may be provided rather than the first check valve 224 and the second check valve 226. However, by providing the first check valve 224 and the second check valve 226 at the main member 202, it is possible to control the flow of the hydraulic oil with a simple structure and high precision, thereby increasing the oil pressure in the pressure-boost chamber 216.

### [Industrial Applicability]

The present disclosure can be applied to an oil pressure generating device of a crosshead engine in which a crosshead is connected to a piston rod and the crosshead engine.

### [Reference Signs List]

100 Uniflow scavenging two-cycle engine (crosshead engine)
112 Piston
112a Piston rod
114 Crosshead
200 Oil pressure generating device
202 Main member
204a, 204b Plunger pressing member
210a, 210b Plunger
212a Head (plunger)
214a Tail (plunger)
216 Pressure-boost chamber
218 Elastic member
220 Inlet port
222 Discharge port
232 First inclined surface (inclined surface)
234 Second inclined surface (inclined surface)
236, 240 First pressing part
238 Second pressing part

## Claims

1. A crosshead engine (100) comprising:
a piston (112);
a piston rod (112a) fixed to the piston (112);
a crankshaft (118);
a connecting rod (116) connected to the crankshaft (118); and
a crosshead (114) through which a first end of the piston rod (112a) and a second end of the connecting rod (116) are connected, and which is configured to reciprocate in a stroke direction of the piston (112) and includes a crosshead pin (114a) connected to the first end of the piston rod (112a), wherein
a first oil pressure chamber (168a) and a second oil pressure chamber (168b) are formed, inside the crosshead pin (114a), in a connection portion of the piston rod (112a) and the crosshead pin (114a), wherein:
the crosshead engine (100) further comprises an oil pressure generating device (200) configured to press hydraulic oil into the first oil pressure chamber (168a); and
the oil pressure generating device (200) includes
a main member (202) configured to reciprocate integrally with the piston (112) and the crosshead (114) in the stroke direction of the piston (112),
a pressure-boost chamber (216) formed in the main member (202), configured to be in communication with an inlet port (220) connected to a supply source of hydraulic oil and a discharge port (222) connected to the first oil pressure chamber (168a), and also configured to pressurize the hydraulic oil guided into the main member (202) from the inlet port (220) and then discharge the pressurized hydraulic oil from the discharge port (222),
a plunger (210a, 210b) of which a tail is located outside the main member (202) and a head faces the pressure-boost chamber (216) inside the main member (202) and which is configured to be slid in a direction intersecting with the stroke direction of the piston (112), and
a plunger pressing member (204a, 204b) having a first pressing part (236, 240) which is disposed apart from the main member (202) in a sliding direction of the plunger (210a, 210b) and in which a distance of separation from the main member (202) is a first distance (La) and a pushing amount of the plunger (210a, 210b) into the pressure-boost chamber (216) side is a first pushing amount, and a second pressing part (238) which has a position different from that of the first pressing part (236, 240) in the stroke direction and in which the distance of separation from the main member (202) is a second distance (Lb) smaller than the first distance (La) and the pushing amount of the plunger (210a, 210b) into the pressure-boost chamber (216) side is a second pushing amount greater than the first pushing amount, and configured to press the plunger (210a, 210b) into the pressure-boost chamber (216) side while the plunger (210a, 210b) moves from the first pressing part (236, 240) to the second pressing part (238), **characterized in that**
by a change in a length of each of the first oil pressure chamber (168a) and second oil pressure chamber (168b) in the stroke direction of the piston (112), positions of the piston (112) at a top dead center and a bottom dead center are variable by a change of a relative position between the piston rod (112a) and the crosshead pin (114a).

2. The crosshead engine (100) according to claim 1, wherein the main member (202) is provided at the crosshead (114).

3. The crosshead engine (100) according to claim 1 or 2, wherein the plunger pressing member (204a, 204b) has an inclined surface (232, 234) formed in a curved shape or a linear shape to press one end of the plunger (210a, 210b), and the inclined surface (232, 234) is formed such that the distance of separation from the main member (202) is gradually reduced from the first pressing part (236, 240) to the second pressing part (238).

4. The crosshead engine (100) according to any one of claims 1 to 3, wherein the plunger pressing member (204a, 204b) is movable from a boost position in which the hydraulic oil is allowed to be pressurized in the pressure-boost chamber (216) to a retreat position in which the hydraulic oil is not allowed to be pressurized in the pressure-boost chamber (216).

5. The crosshead engine (100) according to any one of claims 1 to 4, wherein a pair of plungers (210a, 210b) are provided to be spaced apart from each other in the sliding direction with the pressure-boost chamber (216) interposed therebetween, an elastic member (218) which is configured to apply a biasing force in a direction in which the pair of plungers (210a, 210b) are spaced apart from each other is provided in the pressure-boost chamber (216), and the plunger pressing member (204a, 204b) is provided at each of the pair of plungers (210a, 210b).

6. The crosshead engine (100) according to any one of claims 1 to 5, wherein the main member (202) includes a first check valve (224) which is configured to allow a flow of the hydraulic oil from the inlet port (220) toward the pressure-boost chamber (216) and to suppress the flow of the hydraulic oil from the pressure-boost chamber (216) toward the inlet port (220) and a second check valve (226) which is configured to allow a flow of the hydraulic oil from the pressure-boost chamber (216) toward the discharge port (222) and to suppress the flow of the hydraulic oil from the discharge port (222) toward the pressure-boost chamber (216).

## Patentansprüche

1. Ein Kreuzkopfmotor (100), der aufweist:
einen Kolben (112);
eine Kolbenstange (112a), die an dem Kolben (112) fixiert ist eine Kurbelwelle (118);
eine Pleuelstange (116), die mit der Kurbelwelle (118) verbunden ist; und
einen Kreuzkopf (114), durch den ein erstes Ende der Kolbenstange (112a) und ein zweites Ende der Pleuelstange (116) verbunden sind, und der so gestaltet ist, dass er sich in einer Hubrichtung des Kolbens (112) hin- und herbewegt, und einen Kreuzkopfbolzen (114a) enthält, der mit dem ersten Ende der Kolbenstange (112a) verbunden ist, wobei
eine erste Öldruckkammer (168a) und eine zweite Öldruckkammer (168b) innerhalb des Kreuzkopfbolzens (114a) in einem Verbindungsabschnitt der Kolbenstange (112a) und des Kreuzkopfbolzens (114a) gebildet sind, wobei:
der Kreuzkopfmotor (100) ferner eine Öldruckerzeugungsvorrichtung (200) aufweist, die gestaltet ist, um Hydrauliköl in die erste Öldruckkammer (168a) zu pressen; und
die Öldruckerzeugungsvorrichtung (200) beinhaltet
ein Hauptelement (202), das so gestaltet ist, dass es sich integral mit dem Kolben (112) und dem Kreuzkopf (114) in der Hubrichtung des Kolbens (112) hin- und herbewegt,
eine in dem Hauptelement (202) gebildete Druckverstärkungskammer (216), die so gestaltet ist, dass sie mit einem Einlassanschluss (220), der mit einer Versorgungsquelle für Hydrauliköl in Verbindung steht, und einem Abführanschluss (222), der mit der ersten Öldruckkammer (168a) verbunden ist, in Verbindung steht, und auch so gestaltet ist, dass sie das von dem Einlassanschluss (220) in das Hauptelement (202) geleitete Hydrauliköl mit Druck beaufschlagt und dann das mit Druck beaufschlagte Hydrauliköl von Seiten des Abführanschlusses (222) abführt,
einen Plunger (210a, 210b), von dem ein Ende sich außerhalb des Hauptelements (202) befindet und von dem ein Kopf der Druckverstärkungskammer (216) innerhalb des Hauptelements (202) zugewandt ist und der so gestaltet ist, dass er in einer Richtung gleitet, die sich mit der Hubrichtung des Kolbens (112) schneidet, und
ein Plunger-Drückelement (204a, 204b), das ein erstes Drückteil (236, 240) hat, das von dem Hauptelement (202) in einer Gleitrichtung des Plungers (210a, 210b) beabstandet angeordnet ist und bei dem ein Abstand von dem Hauptelement (202) ein erster Abstand (La) und ein Schubbetrag des Plungers (210a, 210b) in die Seite der Druckverstärkungskammer (216) ein erster Schubbetrag ist, und ein zweites Drückteil (238), das eine Position hat, die sich von der des ersten Drückteils (236, 240) in der Hubrichtung unterscheidet und bei dem der Trennungsabstand von dem Hauptelement (202) ein zweiter Abstand (Lb) ist, der kleiner als der erste Abstand (La) ist, und der Schubbetrag des Plungers (210a, 210b) in die Seite der Druckverstärkungskammer (216) ein zweiter Schubbetrag ist, der größer als der erste Schubbetrag ist, und gestaltet ist, um den Plunger (210a, 210b) in die Seite der Druckverstärkungskammer (216) zu drücken, während sich der Plunger (210a, 210b) von dem ersten Drückteil (236, 240) zu dem zweiten Drückteil (238) bewegt,
**dadurch gekennzeichnet, dass**
durch eine Änderung einer Länge sowohl der ersten Öldruckkammer (168a) als auch der zweiten Öldruckkammer (168b) in der Hubrichtung des Kolbens (112) Positionen des Kolbens (112) an einem oberen Totpunkt und einem unteren Totpunkt mittels einer Änderung einer relativen Position zwischen der Kolbenstange (112a) und dem Kreuzkopfbolzen (114a) variabel sind.

2. Kreuzkopfmotor (100) nach Anspruch 1, wobei das Hauptelement (202) an dem Kreuzkopf (114) vorgesehen ist.

3. Kreuzkopfmotor (100) nach Anspruch 1 oder 2, wobei das Plunger-Drückelement (204a, 204b) eine geneigte Fläche (232, 234) hat, die in einer gekrümmten Form oder einer linearen Form gebildet ist, um ein Ende des Plungers (210a, 210b) zu drücken, und die geneigte Fläche (232, 234) so gebildet ist, dass der Trennungsabstand von dem Hauptelement (202) allmählich von dem ersten Drückteil (236, 240) zu dem zweiten Drückteil (238) reduziert wird.

4. Kreuzkopfmotor (100) nach einem der Ansprüche 1 bis 3, wobei das Plunger-Drückelement (204a, 204b) von einer Verstärkungsposition, in der das Hydrauliköl in der Druckverstärkungskammer (216) mit Druck beaufschlagt werden kann, in eine Zurückweichposition bewegbar ist, in der das Hydrauliköl in der Druckverstärkungskammer (216) nicht mit Druck beaufschlagt werden kann.

5. Kreuzkopfmotor (100) nach einem der Ansprüche 1 bis 4, wobei ein Paar von Plungern (210a, 210b) in Gleitrichtung voneinander beabstandet vorgesehen ist, wobei die Druckverstärkungskammer (216) dazwischen angeordnet ist, ein elastisches Element (218), das so gestaltet ist, dass es eine Vorspannkraft in einer Richtung aufbringt, in der das Paar von Plungern (210a, 210b) voneinander beabstandet ist, in der Druckverstärkungskammer (216) vorgesehen ist, und das Plunger-Drückelement (204a, 204b) an jedem des Paars von Plungern (210a, 210b) vorgesehen ist.

6. Kreuzkopfmotor (100) nach einem der Ansprüche 1 bis 5, wobei das Hauptelement (202) ein erstes Rückschlagventil (224) beinhaltet, das so gestaltet ist, dass es eine Strömung des Hydrauliköls vom Einlassanschluss (220) zu der Druckverstärkungskammer (216) zulässt und die Strömung des Hydrauliköls von der Druckverstärkungskammer (216) zu dem Einlassanschluss (220) unterdrückt, und ein zweites Rückschlagventil (226), das so gestaltet ist, dass es eine Strömung des Hydrauliköls von der Druckverstärkungskammer (216) zu dem Abführanschluss (222) zulässt und die Strömung des Hydrauliköls von dem Abführanschluss (222) zu der Druckverstärkungskammer (216) unterdrückt.

## Revendications

1. Moteur à crosse (100) comprenant :
un piston (112) ;
une tige de piston (112a) fixée au piston (112) ;
un vilebrequin (118) ;
une bielle (116) raccordée au vilebrequin (118) ; et
une crosse (114) par le biais de laquelle sont raccordées une première extrémité de la tige de piston (112a) et une seconde extrémité de la bielle (116), et qui est conçue pour se déplacer en va-et-vient dans une direction de course du piston (112) et comprend un axe de crosse (114a) raccordé à la première extrémité de la tige de piston (112a),
une première chambre à pression d'huile (168a) et une seconde chambre à pression d'huile (168b) étant formées, à l'intérieur de l'axe de crosse (114a), dans une partie de raccordement de la tige de piston (112a) et de l'axe de crosse (114a),
le moteur à crosse (100) comprenant, en outre, un dispositif de génération de pression d'huile (200) conçu pour presser de l'huile hydraulique dans la première chambre à pression d'huile (168a) ; et
le dispositif de génération de pression d'huile (200) comprenant
un élément principal (202) conçu pour se déplacer en va-et-vient solidairement avec le piston (112) et la crosse (114) dans la direction de course du piston (112),
une chambre de surpression (216) formée dans l'élément principal (202), conçue pour communiquer avec un orifice d'entrée (220) raccordé à une source d'alimentation en huile hydraulique et un orifice de sortie (222) raccordé à la première chambre à pression d'huile (168a), et également conçue pour mettre sous pression l'huile hydraulique guidée dans l'élément principal (202) à partir de l'orifice d'entrée (220) puis rejeter l'huile hydraulique sous pression à partir de l'orifice de sortie (222),
un plongeur (210a, 210b) dont une queue est située à l'extérieur de l'élément principal (202) et une tête fait face à la chambre de surpression (216) à l'intérieur de l'élément principal (202) et qui est conçu pour être mis en coulissement dans une direction croisant la direction de course du piston (112), et
un élément d'application de pression sur le plongeur (204a, 204b) comportant une première partie de pression (236, 240) qui est disposée à l'écart de l'élément principal (202) dans une direction de coulissement du plongeur (210a, 210b) et dans lequel une distance de séparation vis-à-vis de l'élément principal (202) est une première distance (La) et un degré de poussée appliqué au plongeur (210a, 210b) l'entraînant dans le côté de la chambre de surpression (216) est un premier degré de poussée, et une seconde partie de pression (238), dont la position est différente de celle de la première partie de pression (236, 240) dans la direction de course et dans lequel la distance de séparation vis-à-vis de l'élément principal (202) est une seconde distance (Lb) inférieure à la première distance (La) et le degré de poussée appliqué au plongeur (210a, 210b) l'entraînant dans le côté de la chambre de surpression (216) est un second degré de poussée supérieur au premier degré de poussée, et conçu pour presser le plongeur (210a, 210b) dans le côté de la chambre de surpression (216) tandis que le plongeur (210a, 210b) se déplace de la première partie de pression (236, 240) à la seconde partie de pression (238),
**caractérisé en ce que**
par un changement d'une longueur de chacune de la première chambre à pression d'huile (168a) et la seconde chambre à pression d'huile (168b) dans la direction de course du piston (112), des positions du piston (112) à un point mort haut et un point mort bas sont variables par le biais d'un changement d'une position relative de la tige de piston (112a) et de l'axe de crosse (114a).

2. Moteur à crosse (100) selon la revendication 1, dans lequel l'élément principal (202) est placé au niveau de la crosse (114).

3. Moteur à crosse (100) selon la revendication 1 ou 2, dans lequel l'élément d'application de pression sur le plongeur (204a, 204b) comporte une surface inclinée (232, 234) pourvue d'une forme incurvée ou d'une forme linéaire pour presser une extrémité du plongeur (210a, 210b), et la surface inclinée (232, 234) est formée de telle sorte que la distance de séparation vis-à-vis de l'élément principal (202) soit progressivement réduite de la première partie de pression (236, 240) vers la seconde partie de pression (238).

4. Moteur à crosse (100) selon l'une quelconque des revendications 1 à 3, dans lequel l'élément d'application de pression sur le plongeur (204a, 204b) est déplaçable d'une position d'amplification dans laquelle l'huile hydraulique peut être mise sous pression dans la chambre de surpression (216) à une position de retrait dans laquelle l'huile hydraulique ne peut pas être mise sous pression dans la chambre de surpression (216).

5. Moteur à crosse (100) selon l'une quelconque des revendications 1 à 4, dans lequel une paire de plongeurs (210a, 210b) sont placés de façon à être espacés l'un de l'autre dans la direction de coulissement avec la chambre de surpression (216) interposée entre eux, un élément élastique (218) qui est conçu pour appliquer une force de sollicitation dans une direction dans laquelle la paire de plongeurs (210a, 210b) sont espacés l'un de l'autre est placé dans la chambre de surpression (216), et l'élément d'application de pression sur le plongeur (204a, 204b) est placé au niveau de chaque plongeur de la paire de plongeurs (210a, 210b).

6. Moteur à crosse (100) selon l'une quelconque des revendications 1 à 5, dans lequel l'élément principal (202) comprend un premier clapet de non-retour (224) qui est conçu pour permettre un écoulement de l'huile hydraulique de l'orifice d'entrée (220) vers la chambre de surpression (216) et pour bloquer l'écoulement de l'huile hydraulique de la chambre de surpression (216) vers l'orifice d'entrée (220) et un second clapet de non-retour (226) qui est conçu pour permettre un écoulement de l'huile hydraulique de la chambre de surpression (216) vers l'orifice de sortie (222) et pour bloquer l'écoulement de l'huile hydraulique de l'orifice de sortie (222) vers la chambre de surpression (216).
